# EUROPEAN PATENT APPLICATION

(11) **EP 4 717 897 A1**
(43) Date of publication of application: **01.04.2026**
(21) Application number: 25205039.8
(22) Date of filing: 26.09.2025
(51) Int. Cl.: F02C 7/06, F01D 25/16, F02C 7/36, F16C 33/58

(54) **GEAR RIM INTEGRATED BEARING OF A GEARBOX OF A GAS TURBINE ENGINE**

(30) Priority: 27.09.2024 US 202418899992
(71) Applicant: PRATT & WHITNEY CANADA CORP., Longueuil, Québec J4G 1A1 (CA)
(72) Inventor: DESJARDINS, Michel, (01BE5) Longueuil, J4G 1A1 (CA); LANDRY-DROLET, Guillaume, (01BE5) Longueuil, J4G 1A1 (CA)
(74) Representative: Dehns

(57) **Abstract**

A gearbox (301) of a gas turbine engine of an aircraft with a two-bearing arrangement includes a coupling shaft (310) rotatable about a rotational axis (A) thereof, an output gear (320) including a first gear element (330), a gear web (34) and a bearing assembly (350). The gear web (340) is rotatable with the coupling shaft (310) and includes a shaft (341) connected with the coupling shaft (310), a rim (342) including a second gear element (3421) disposed to form a gear mesh (360) with the first gear element (330) and a web (343) extending from the shaft (341) to the rim (342). The bearing assembly (350) includes a fixed bearing support (351) and a bearing element (352) supportively disposable between the fixed bearing support (351) and the rim (342) of the gear web (340).

## Description

### BACKGROUND

The present invention relates to gas turbine engines and, in particular, to a gear rim integrated bearing of a gearbox of a gas turbine engine of an aircraft propulsion systems such as a thermal and/or electrical engine.

In a gas turbine engine, fuel and compressed air are combusted in a combustor to produce a high-temperature and high-pressure fluid. This fluid enters a turbine and interacts with rows or stages of turbine blades and vanes. The interaction between the high-temperature and high-pressure fluid with the turbine blades and vanes causes the stages of turbine blades to rotate a rotor. The rotor rotation drives a compressor to compress the air for the combustor and, as noted above, can be used to drive operations of a generator to produce electricity and/or for propulsion.

Besides gas turbine engines, other types of engines of aircraft propulsion systems are available. These include, but are not limited to, electrical engines and hybrid engines.

In any case, a gearbox is typically interposed between the engine or power source and a component to be powered, such as a propeller. The gearbox drives the components at a required speed and carries resulting torque and loads.

### SUMMARY

According to an aspect of the invention, a gearbox of a gas turbine engine of an aircraft is provided. The gearbox may have a two-bearing arrangement. The gearbox includes a coupling shaft rotatable about a rotational axis thereof, an output gear including a first gear element, a gear web and a bearing assembly. The gear web is rotatable with the coupling shaft and includes a shaft connected with the coupling shaft, a rim including a second gear element disposed to form a gear mesh with the first gear element and a web extending from the shaft to the rim. The bearing assembly includes a fixed bearing support and a bearing element supportively disposable between the fixed bearing support and the rim of the gear web.

Optionally, and in accordance with the above, the web is formed to define holes arranged about the rotational axis.

Optionally, and in accordance with any of the above, the first and second gear elements are spur gears and a center of the gear mesh and a center of the bearing element are configured for axial alignment.

Optionally, and in accordance with any of the above, the bearing element includes a roller bearing with an inner race supportable by the fixed bearing support and an outer race coupled with the rim of the gear web.

Optionally, and in accordance with any of the above, the outer race is integral with the rim of the gear web.

Optionally, and in accordance with any of the above, the first and second gear elements are helical gears.

Optionally, and in accordance with any of the above, the bearing element includes at least one of a ball bearing with an inner race supportable by the fixed bearing support and an outer race coupled with the rim of the gear web and a conical bearing with an inner race supportable by the fixed bearing support and an outer race coupled with the rim of the gear web.

Optionally, and in accordance with any of the above, the outer race is integral with the rim of the gear web.

According to another aspect of the invention, a gearbox of a gas turbine engine of an aircraft is provided. The gearbox includes a coupling shaft rotatable about a rotational axis thereof, an output gear including a first spur gear element, a gear web and a bearing assembly. The gear web is rotatable with the coupling shaft and includes a shaft connected with the coupling shaft, a rim including a second spur gear element disposed to form a gear mesh with the first spur gear element and a web extending from the shaft to the rim. The bearing assembly includes a fixed bearing support and a bearing element supportively disposable between the fixed bearing support and the rim of the gear web and having a center configured for axial alignment with a center of the gear mesh.

Optionally, and in accordance with any of the above, the gearbox has a two-bearing arrangement.

Optionally, and in accordance with any of the above, the web is formed to define holes arranged about the rotational axis.

Optionally, and in accordance with any of the above, the bearing element includes a roller bearing with an inner race supportable by the fixed bearing support and an outer race coupled with the rim of the gear web.

Optionally, and in accordance with any of the above, the outer race is integral with the rim of the gear web.

Optionally, and in accordance with any of the above, the web includes a forward facing side and a rearward facing side. One or both of the rearward facing side is tapered toward the forward facing side with increasing radial distance from the coupling shaft and the forward facing side is tapered toward the rearward facing side with increasing radial distance from the coupling shaft. The forward facing side includes, at an outboard section thereof, a concave surface forming a shoulder with the outer race.

According to another aspect of the invention, a gearbox of a gas turbine engine of an aircraft is provided. The gearbox includes a coupling shaft rotatable about a rotational axis thereof, an output gear including a first helical gear element, a gear web and a bearing assembly. The gear web is rotatable with the coupling shaft and includes a shaft connected with the coupling shaft, a rim including a second helical gear element disposed to form a gear mesh with the first helical gear element and a web extending from the shaft to the rim. The bearing assembly includes a fixed bearing support and a bearing element supportively disposable between the fixed bearing support and the rim of the gear web whereby a gear load and bearing reaction are axially positioned to contain a load path within a bearing reaction circle of the bearing element.

Optionally, and in accordance with any of the above, the gearbox has a two-bearing arrangement.

Optionally, and in accordance with any of the above, the web is formed to define holes arranged about the rotational axis.

Optionally, and in accordance with any of the above, the bearing element includes at least one of a ball bearing with an inner race supportable by the fixed bearing support and an outer race coupled with the rim of the gear web and a conical bearing with an inner race supportable by the fixed bearing support and an outer race coupled with the rim of the gear web.

Optionally, and in accordance with any of the above, the outer race is integral with the rim of the gear web.

Optionally, and in accordance with any of the above, the web includes a forward facing side and a rearward facing side. One or both of the rearward facing side is tapered toward the forward facing side with increasing radial distance from the coupling shaft and the forward facing side is tapered toward the rearward facing side with increasing radial distance from the coupling shaft. The forward facing side includes, at an outboard section thereof, a concave surface forming a shoulder (or an obtuse angle) with the outer race.

Additional features and advantages are realized through the techniques of the present disclosure. Other embodiments and aspects of the invention are described in detail herein and are considered a part of the claimed technical concept. For a better understanding of the invention with the advantages and the features, refer to the description and to the drawings.

### BRIEF DESCRIPTION OF THE DRAWINGS

For a more complete understanding of this invention, reference is now made to the following brief description, taken in connection with the accompanying drawings and detailed description, wherein like reference numerals represent like parts:
FIG. 1 is a cross-sectional view of a prior art turboshaft engine;
FIG. 2 is a cross-sectional view of a prior art gearbox of a turboshaft engine with a two-bearing arrangement;
FIG. 3 is an enlarged cross-sectional view of a portion of a gearbox of a turboshaft engine with a two-bearing arrangement with a gear rim integrated bearing in which a bearing is aligned with a gear mesh in accordance with embodiments;
FIG. 4 is an enlarged cross-sectional view of a portion of a gearbox of a turboshaft engine with a two-bearing arrangement with a gear rim integrated ball bearing in accordance with embodiments;
FIG. 5 is an enlarged cross-sectional view of a portion of a gearbox of a turboshaft engine with a two-bearing arrangement with a gear rim integrated conical bearing in accordance with embodiments, and
FIG. 6 is a schematic axial view of a web of the portion of the gearbox of FIGS. 3 and 4 in accordance with embodiments.

### DETAILED DESCRIPTION

The following disclosure is applicable to any type of gas turbine engine, including, but not limited to, turbofans, turboshafts, turboprops, turbojets, electrical drives, hybrid drives, etc. The gas turbine engine described below is provided by way of example, and should not be interpreted as limiting the scope of the application or the claims in any way.

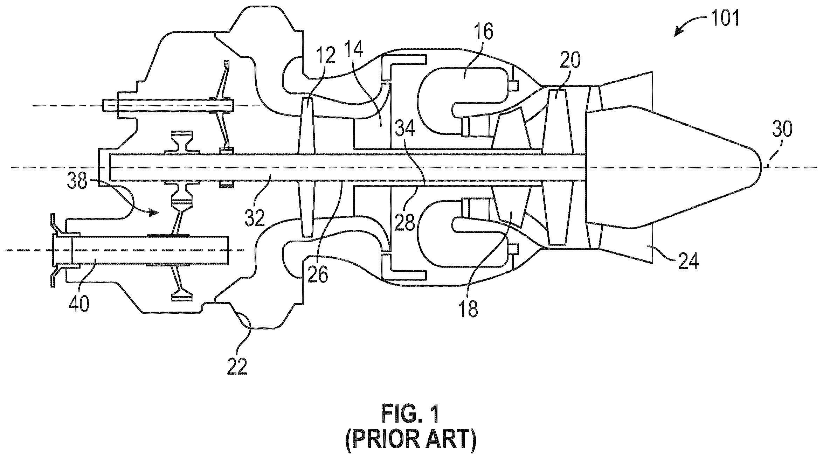

With reference to FIG. 1, a turboshaft engine 101 is provided and configured as a gas turbine engine. In particular, the turboshaft engine 101 is a generally conventional turboshaft engine generally including, in serial flow communication, a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14 and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The turboshaft engine 101 has multiple, i.e. two or more, spools which may perform the compression to pressurize the air received through an air inlet 22, and which extract energy from the combustion gases before they exit via an exhaust outlet 24. For example, the turboshaft engine 101 can include a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a same speed as the low pressure turbine section 20. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another.

The turboshaft engine 101 may further include a transmission 38 driven by the low pressure shaft 32 and driving a rotatable output shaft 40. The transmission 38 may vary a ratio between rotational speeds of the low pressure shaft 32 and the output shaft 40.

Aircraft engines, such as the turboshaft engine 101 of FIG. 1, have gearboxes to adjust speed from the turbine speed to a desired output shaft speed. Gearboxes could be of various types or architectures. An example of a gearbox type or architecture is a double reduction gearbox with single or multiple branches. Those branches are referred to as layshafts and include two gears that are axially separate and connected via a quill shaft. A pinion gear is connected to the turbine shaft and drives the layshaft through a first gear mesh. Torque is transmitted through the quill shaft and in turn transmits the torque to the second gear. The latter drives the output gear through a second gear mesh. The output gear is connected to the output shaft, delivering the torque at the prescribed speed. In addition to the speed adjustment, the gearbox can include torque measurement assembly, which often includes a twist-controlled shaft and a reference tube between which a phase shift is measured to determine the torque. The twist-controlled shaft can be sensitive to a bending moment which can affect the shaft stress/life.

Typically, a layshaft is formed as a solid piece (i.e., a one-piece machined or assembled in a non-separable or separable manner) with two bearing supports, one on each end. The shaft portion is sized to cope with the resulting bending moment from the gear load on a two-bearing layshaft.

It has been found that cancelling the bending moment in the layshaft can be beneficial toward optimizing shaft size/weight as well as being a pre-requisite in the case of a twist-controlled shaft. To achieve this, a four-bearing arrangement has been proposed. In a four-bearing arrangement, both gears are supported by two bearings each, and are connected by a quill shaft. Another solution could be to have the gear meshes centered with the bearing support, but this tends to lead to a bending moment in the off-center gear webs. In addition, deflection in the gear meshes may result in small axial force components that can be detrimental to roller bearings. The four-bearing solution is therefore heavy and expansive. As such, a two-bearing solution has been proposed.

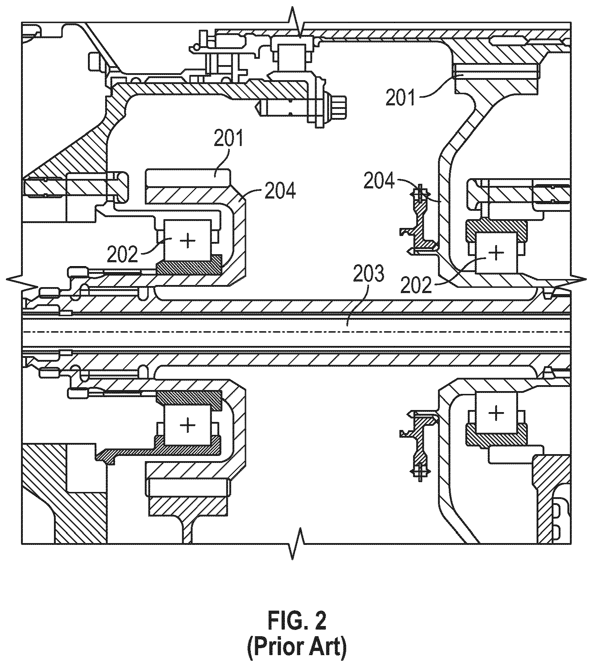

With reference to FIG. 2, in the two-bearing solution, both gears 201 are supported by a single bearing 202, and are connected by a quill shaft 203. While the two-bearing solution offers weight reduction advantages over the four-bearing solution, the two-bearing solution still tends to be heavy. This is because, in each of the gears 201, the gear webs 204 take on gear mesh loads and accordingly have to be designed and built for such loading.

A need therefore exists for a gearbox of a gas turbine engine of an aircraft that is capable of adjusting speed from the turbine speed to the desired output shaft speed and cancelling bending loads while remaining relatively lightweight.

Thus, as will be described below, a design arrangement of a gearbox of a gas turbine engine of an aircraft is provided. The design arrangement is supported by two bearings (i.e., the two-bearing arrangement) and is capable of cancelling bending loads to thus unload both gear webs and which provides an advantage on weight and cost. In the design arrangement, each of the bearings rolls directly under the gear rim. The outer race can be fitted inside the gear rim, integrally machined or provided as a separate outer ring that is assembled to the gear rim. Bearing internal radial clearances are set to account for radial growth of the gear rim under centrifugal force.

In one example of the design arrangement, roller bearings are used and axially align with the respective gear mesh center. In this case, a gear type is a spur gear so no axial loads are generated (roller bearing reacts only radial loads). In another example of the design arrangement, helical gears can be used to generate radial and axial load components with a ball bearing used on one end to cancel the resultant axial gear load component from the helical gear. In these or other cases, the ball bearing is axially located at a specific axial distance from the gear mesh center so that the bending moment generated by the gear is minimized or cancelled while the other end has a roller bearing located under the gear rim and ball bearing load capacity is optimized by varying a helical gear load angle to obtain an optimal bearing capacity.

Whereas gear webs are usually sized for avoiding/positioning natural frequency vibrations and to transmit torque and react to bending/gear loads, in each of the configurations noted above, gear load are removed from having to propagate through the corresponding webs and the webs can be sized appropriately for torque transmission leading to weight reductions.

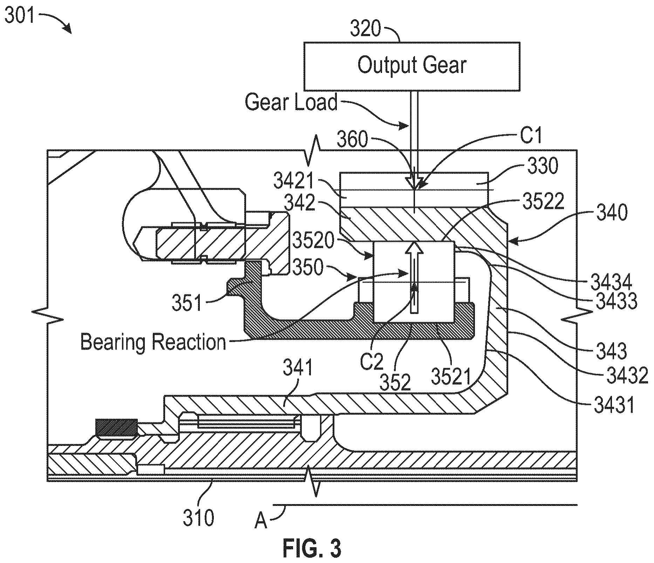

With reference to FIGS. 3, 4, and 5, a gearbox 301 of a gas turbine engine of an aircraft is provided with a two-bearing arrangement generally as illustrated in FIG. 2. The gearbox 301 includes a coupling shaft 310, which is rotatable about a rotational axis A thereof, an output gear 320 that leads to an output shaft and includes a first gear element 330 (i.e., teeth of the output gear 320), a gear web 340 that is rotatable with the coupling shaft 310 and a bearing assembly 350. The gear web 340 includes a shaft 341 that is connected with the coupling shaft 310, a rim 342 that includes a second gear element 3421 (i.e., teeth of the rim 342) disposed to form a gear mesh 360 with the first gear element 330 and a web 343 extending from the shaft 341 to the rim 342. The bearing assembly 350 includes a fixed bearing support 351 and a bearing element 352. The bearing element 352 is supportively disposable between the fixed bearing support 351 and the rim 342 of the gear web 340.

While the bearing element 352 is illustrated as a singular feature in FIGS. 3, 4 and 5, it is to be understood that this is not required and that other embodiments are possible in which the bearing element 352 is provided as plural bearing elements 352. The bearing element 352 is described herein as a singular feature for purposes of clarity and brevity but an interpretation of the application should not be limited to this case.

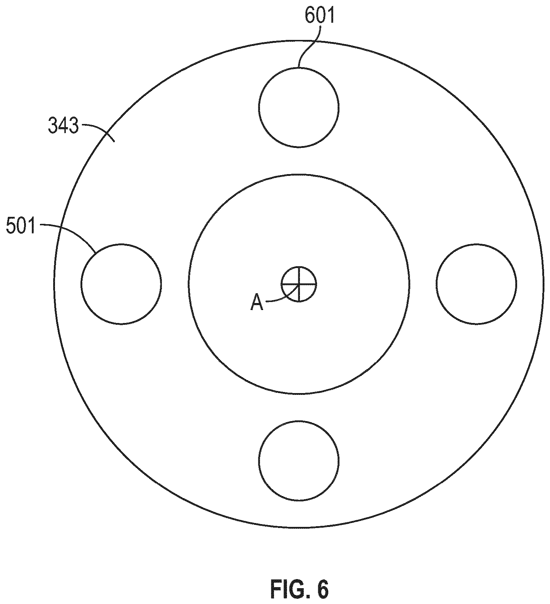

With continued reference to FIGS. 3, 4 and 5 and with additional reference to FIG. 6, the web 343 can be formed to define holes 601 for weight reduction of the gearbox 301. The holes 601 can be arranged about the rotational axis A and can be provided in a symmetric pattern as shown in FIG. 6 or in an asymmetric pattern in some cases.

As shown in FIG. 3, the first and second gear elements 330 and 3421 can be provided as spur gears that generate radial loads but do not generate axial loads. In these or other cases, a center C1 of the gear mesh 360 and a center C2 of the bearing element 352 can be configured for axial alignment with each other whereby a vector or radial dimension of the gear loads axially aligns with a vector or radial dimension of the bearing reaction. Also, in these or other cases, the bearing element 352 can include a roller bearing 3520 with an inner race 3521 that is supportable by the fixed bearing support 351 and an outer race 3522 that is coupled with the rim 342 of the gear web 340. In accordance with embodiments, the outer race 3522 can be integral with or otherwise connected with the rim 342 of the gear web 340.

Also as shown in FIG. 3, the web 343 can include a forward facing side 3431 and a rearward facing side 3432. One or both of the rearward facing side 3432 can be tapered toward the forward facing side 3431 with increasing radial distance from the coupling shaft 310 and the forward facing side 3431 can be tapered toward the rearward facing side 3432 with increasing radial distance from the coupling shaft 310 (for clarity and brevity, in FIG. 3, only the forward facing side 3431 being tapered toward the rearward facing side 3432 is illustrated). The forward facing side 3431 includes, at an outboard section thereof, a concave surface 3433 that forms a shoulder 3434 with the outer race 3522. In accordance with additional or alternative embodiments, the web 343 can have a uniform thickness in the radial dimension.

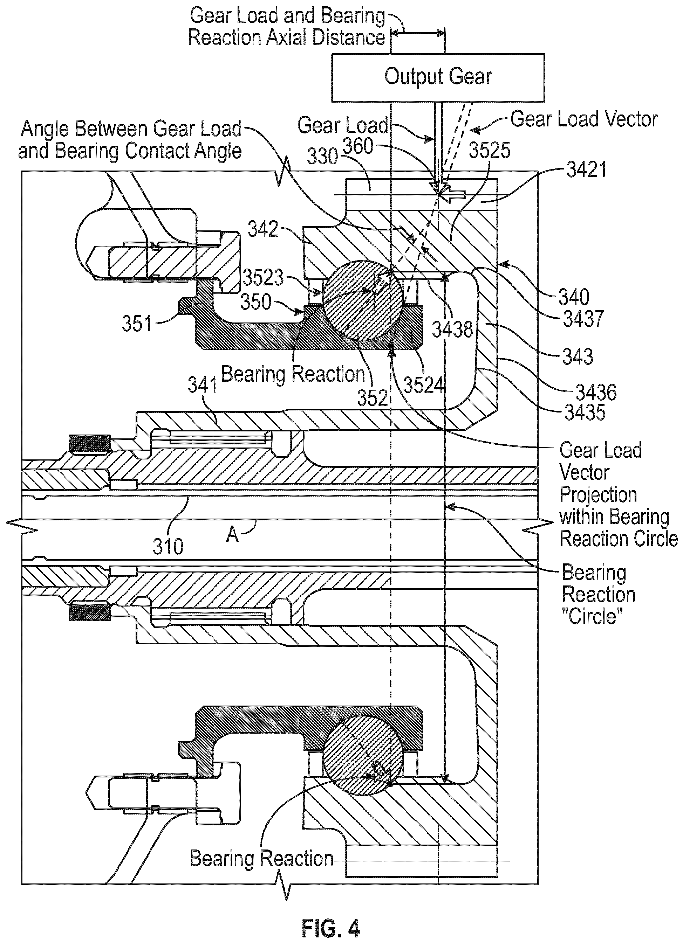

As shown in FIG. 4, the first and second gear elements 330 and 3421 can be provided as helical gears that generate radial and axial loads. In these or other cases, the bearing element 352 can be configured for angular alignment with a gear load direction of the gear mesh 360 whereby one or more of the radial and axial dimensions of the gear loads can but are not required to axially align with one or more of the radial and axial dimensions of the bearing reaction. Also, in these or other cases, the bearing element 352 can include a ball bearing 3523 that cancels resultant axial gear loads with an inner race 3524 supportable by the fixed bearing support 351 and an outer race 3525 that is coupled with the rim 342 of the gear web 340. In accordance with embodiments, the outer race 3525 can be integral with or otherwise connected with the rim 342 of the gear web 340.

Thus, in FIG. 4, a gear load and a bearing reaction are axially positioned to contain a load path within the rim 342 of the gear web 340 and so that a projection of a gear load vector sits within the bearing reaction "circle" of the bearing element 352. Additionally, an angle of the gear load vector and a bearing contact angle can be optimized to maximize bearing capacity and durability.

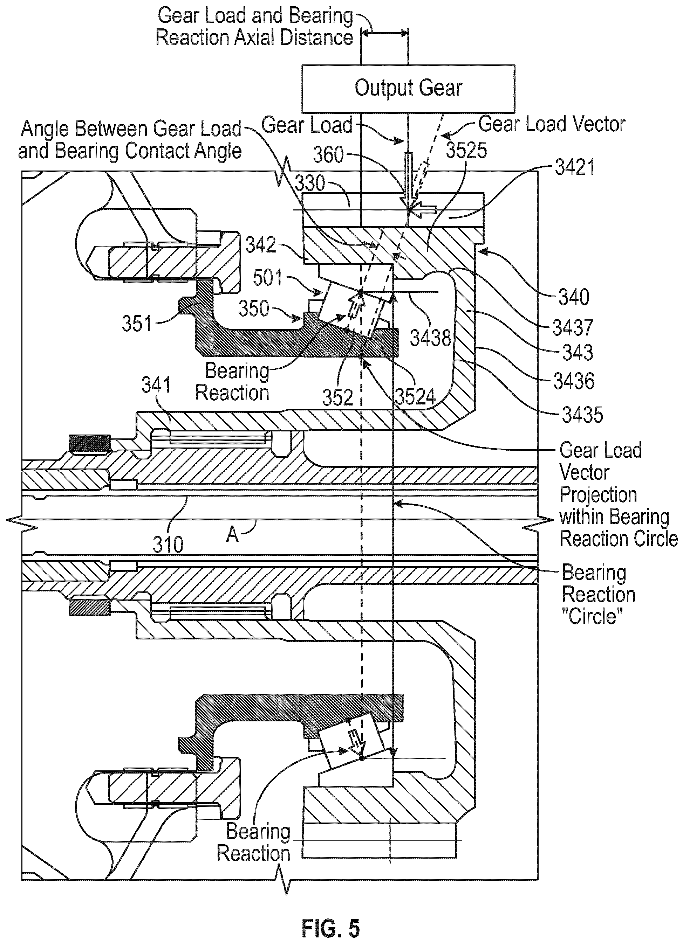

Also as shown in FIG. 4, the web 343 can include a forward facing side 3435 and a rearward facing side 3436. One or both of the rearward facing side 3436 can be tapered toward the forward facing side 3435 with increasing radial distance from the coupling shaft 310 and the forward facing side 3435 can be tapered toward the rearward facing side 3436 with increasing radial distance from the coupling shaft 310 (for clarity and brevity, in FIGS. 4 and 5, only the forward facing side 3435 being tapered toward the rearward facing side 3436 is illustrated). The forward facing side 3435 can include, at an outboard section thereof, a concave surface 3437 that forms an obtuse angle 3438 with the outer race 3525. In accordance with additional or alternative embodiments, the web 343 can have a uniform thickness in the radial dimension.

As shown in FIG. 5, the bearing element 352 can include a conical bearing 501 (i.e., instead of the ball bearing 3523 of FIG. 4). As in FIG. 4, in FIG. 5, a gear load and a bearing reaction are axially positioned to contain a load path within the rim 342 of the gear web 340 and so that a projection of a gear load vector sits within the bearing reaction "circle" of the bearing element 352. Additionally, an angle of the gear load vector and a bearing contact angle can be optimized to maximize bearing capacity and durability.

Technical effects and benefits of the present invention are the provision of a gearbox of a gas turbine engine of an aircraft with a gear rim integrated bearing that removes gear loads from going through the corresponding webs. The corresponding webs can then be sized for torque transmission and stiffness leading to weight reductions.

The corresponding structures, materials, acts and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the technical concepts in the form disclosed. Many modifications and variations will be apparent to those of ordinary skill in the art without departing from the scope and spirit of the invention. The embodiments were chosen and described in order to best explain the principles of the invention and the practical application and to enable others of ordinary skill in the art to understand the invention for various embodiments with various modifications as are suited to the particular use contemplated.

While the preferred embodiments to the invention have been described, it will be understood that those skilled in the art, both now and in the future, may make various improvements and enhancements which fall within the scope of the claims which follow. These claims should be construed to maintain the proper protection for the invention first described.

## Claims

1. A gearbox (301) of a gas turbine engine (101) of an aircraft having a two-bearing arrangement, the gearbox (301) comprising:
a coupling shaft (310) rotatable about a rotational axis (A) thereof;
an output gear (320) comprising a first gear element (330);
a gear web (340) rotatable with the coupling shaft (310) and comprising:
a shaft (341) connected with the coupling shaft (310);
a rim (342) comprising a second gear element (3421) disposed to form a gear mesh (360) with the first gear element (330); and
a web (343) extending from the shaft (341) to the rim (342); and
a bearing assembly (350) comprising a fixed bearing support (351) and a bearing element (352) supportively disposed between the fixed bearing support (351) and the rim (342) of the gear web (340).

2. The gearbox (301) according to claim 1, wherein the web (343) is formed to define holes (601) arranged about the rotational axis (A).

3. The gearbox (301) according to claim 1 or 2, wherein the first (330) and second (3421) gear elements are spur gears and a center of the gear mesh (360) and a center of the bearing element (352) are configured for axial alignment.

4. The gearbox (301) according to claim 1 or 2, wherein the first (330) and second (3421) gear elements are helical gears.

5. The gearbox (301) according to claim 1, 2 or 4, wherein the bearing element (352) comprises:
a ball bearing (3523) with an inner race (3524) supportable by the fixed bearing support (351) and an outer race (3525) coupled with the rim (342) of the gear web (340); and/or
a conical bearing (501) with an inner race (3524) supportable by the fixed bearing support (351) and an outer race (3525) coupled with the rim (342) of the gear web (340).

6. The gearbox (301) according to claim 5, wherein the outer race (3525) is integral with the rim (342) of the gear web (340).

7. A gearbox (301) of a gas turbine engine (101) of an aircraft, the gearbox (301) comprising:
a coupling shaft rotatable about a rotational axis (A) thereof;
an output gear (320) comprising a first spur gear element (330);
a gear web (340) rotatable with the coupling shaft (310) and comprising:
a shaft (341) connected with the coupling shaft (310);
a rim (342) comprising a second spur gear element (3421) disposed to form a gear mesh (360) with the first spur gear element (330); and
a web (343) extending from the shaft (341) to the rim (342); and
a bearing assembly (350) comprising a fixed bearing support (351) and a bearing element (352) supportively disposed between the fixed bearing support (351) and the rim (342) of the gear web (340), the bearing element (352) having a center configured for axial alignment with a center of the gear mesh (360).

8. The gearbox (301) according to claim 1, 2, 3 or 7, wherein the bearing element (352) comprises a roller bearing (3520) with an inner race (3521) supportable by the fixed bearing support (351) and an outer race (3522) coupled with the rim (342) of the gear web (340).

9. The gearbox according to claim 8, wherein the web (343) comprises:
a forward facing side (3431); and
a rearward facing side (3432),
wherein:
one or both of:
the rearward facing side (3432) is tapered toward the forward facing side (3431) with increasing radial distance from the coupling shaft (310); and
the forward facing side (3431) is tapered toward the rearward facing side (3432) with increasing radial distance from the coupling shaft (310); and
the forward facing side (3431) comprises, at an outboard section thereof, a concave surface (3433) forming a shoulder (3434) with the outer race (3525).

10. A gearbox (301) of a gas turbine engine (101) of an aircraft, the gearbox (301) comprising:
a coupling shaft (310) rotatable about a rotational axis (A) thereof;
an output gear (320) comprising a first helical gear element (330);
a gear web (340) rotatable with the coupling shaft (310) and comprising:
a shaft (341) connected with the coupling shaft (310);
a rim (342) comprising a second helical gear element (3421) disposed to form a gear mesh (360) with the first helical gear element (330); and
a web (343) extending from the shaft (341) to the rim (342); and
a bearing assembly (350) comprising a fixed bearing support (351) and a bearing element (352) supportively disposable between the fixed bearing support (351) and the rim (342) of the gear web (340) whereby a gear load and bearing reaction are axially positioned to contain a load path within a bearing reaction circle of the bearing element.

11. The gearbox (301) according to claim 10, wherein the bearing element (352) comprises:
a ball bearing (3523) with an inner race (3524) supportable by the fixed bearing support (351) and an outer race (3525) coupled with the rim (342) of the gear web (340); and/or
a conical bearing (501) with an inner race (3524) supportable by the fixed bearing support (351) and an outer race (3525) coupled with the rim (342) of the gear web (340).

12. The gearbox (301) according to claim 8 or 11, wherein the outer race (3522;3525) is integral with the rim (342) of the gear web (340).

13. The gearbox (301) according to claim 11 or 12, wherein the web (343) comprises:
a forward facing side (3435); and
a rearward facing side (3436), wherein:
one or both of:
the rearward facing side (3436) is tapered toward the forward facing side (3435) with increasing radial distance from the coupling shaft (310); and
the forward facing (3435) side is tapered toward the rearward facing side (3436) with increasing radial distance from the coupling shaft (310); and
the forward facing side (3435) comprises, at an outboard section thereof, a concave surface (3437) forming a shoulder with the outer race (3525).

14. The gearbox (301) according to any of claims 7 to 13, wherein the gearbox (301) has a two-bearing arrangement.

15. The gearbox (301) according to any of claims 7 to 14, wherein the web (343) is formed to define holes (601) arranged about the rotational axis (A).
